# EUROPÄISCHE PATENTANMELDUNG

(11) **EP 4 297 202 A1**
(43) Veröffentlichungstag der Anmeldung: **27.12.2023**
(21) Anmeldenummer: 22179942.2
(22) Anmeldetag: 20.06.2022
(51) Int. Cl.: H01R 43/052, H02G 3/00, B25J 11/00, B25J 5/02, B65G 54/02

(54) **MODUL UND SYSTEM ZUR KONFEKTIONIERUNG VON ELEKTRISCHEN LEITUNGEN**

(71) Anmelder: Komax SLE GmbH & Co. KG, 94481 Grafenau (DE)
(72) Erfinder: BREDL, Korbinian, 94258 Frauenau (DE); HELL, Matthias, 94258 Frauenau (DE); HOPF, Marcus, 94169 Thurmansbang (DE); MORA-SANCHEZ, Enny, 94474 Vilshofen (DE); WEININGER, Marco, 94513 Schönberg (DE)
(74) Vertreter: Kramer Barske Schmidtchen Patentanwälte PartG mbB

(57) **Zusammenfassung**

Ein Modul (2) für ein System (1) zur Konfektionierung von elektrischen Leitungen weist eine Maschinenbasis, auf der mindestens eine Prozessstation zur Bearbeitung von elektrischen Leitungen montierbar ist, und eine asynchrone und pitchfreie Transporteinrichtung zum Transport von mindestens einer der elektrischen Leitungen zu der mindestens einen Prozessstation hin und/oder von der mindestens einen Prozessstation weg auf.

## Beschreibung

Die vorliegende Erfindung betrifft ein Modul für ein System zur Konfektionierung von elektrischen Leitungen und ein System zur Konfektionierung von elektrischen Leitungen.

Zum Beispiel für die Herstellung von Leitungssteckverbindungen werden elektrische Leitungen konfektioniert. Dies erfolgt bspw., indem Leitungsenden durch Crimpen mit Kontaktteilen versehen werden. Dazu sind in der Regel mehrere Arbeitsschritte erforderlich. Bspw. werden die Leitungsenden abisoliert, werden in der Leitung möglicherweise vorhandene Schirme aufgeweitet, und werden die Kontakteile auf die so vorbereiteten Leitungsenden gesteckt, bevor die Kontaktteile und die Leitungsenden durch Crimpen fest miteinander verbunden werden.

Es sind Systeme zur Konfektionierung von elektrischen Leitungen bekannt, die einen oder mehrere solche Arbeitsschritte automatisch oder halbautomatisch durchführen. Beispielsweise offenbart die WO 2020/020422 A1 eine Anlage zur automatischen Konfektionierung von Leitungen.

Solche Systeme haben üblicherweise einen festen Aufbau, bei dem einzelne Prozessstationen zur Durchführung von Arbeitsschritten in einer bestimmten Reihenfolge nebeneinander vorgesehen sind. Die zu konfektionierenden elektrischen Leitungen werden mittels einer Transporteinrichtung von einer Prozessstation zur nächsten Prozessstation bewegt, wo die jeweiligen Arbeitsschritte durchgeführt werden. Die Transporteinrichtung weist üblicherweise einen oder mehrere Werkstückträger zum Halten der elektrischen Leitungen und bspw. einen Riemen, eine Kette oder eine Welle zur Bewegung des Werkstückträgers/der Werkstückträger auf. In dem Fall mehrerer Werkstückträger erfolgt die Bewegung der Werkstückträger aufgrund des gemeinsamen Antriebs üblicherweise synchron und mit einem festen Pitch, d.h. einer festen Verschiebungsstrecke pro Taktzeit. Bspw. bei Verwendung eines Riemens werden alle an dem Riemen befestigten Werkstückträger gleichzeitig und um dieselbe Strecke entsprechend der Bewegung des Riemens bewegt.

Die Arbeitsschritte an den einzelnen Prozessstationen können unterschiedlich lange Bearbeitungszeiten in Anspruch nehmen. Aufgrund der synchronen Bewegung der Werkstückträger kann eine Weiterbewegung der Werkstückträger zu der jeweils nächsten Prozessstation jedoch erst dann erfolgen, wenn an jeder Prozessstation der dort durchgeführte Arbeitsschritt abgeschlossen ist. Die minimale Taktzeit wird somit durch die Prozessstation mit der längsten Bearbeitungszeit vorgegeben. Die Produktionskapazitäten werden durch diese minimale Taktzeit begrenzt.

Bei Systemen, die Prozessstationen mit unterschiedlich langen Bearbeitungszeiten aufweisen, können daher Prozessstationen mit kurzen Bearbeitungszeiten über einen Teil der Zeit ungenutzt sein, so dass ihre Kapazitäten nicht voll ausgeschöpft werden. Weiterhin ist der Abstand der Prozessstationen durch den Pitch starr festgelegt.

Aufgabe der vorliegenden Erfindung ist es, die Möglichkeiten bei der Gestaltung eines Systems zur Konfektionierung von elektrischen Leitungen und/oder eine Ausnutzung vorhandener Bearbeitungskapazitäten zu verbessern.

Diese Aufgabe wird gelöst durch ein Modul nach Anspruch 1 oder ein System nach Anspruch 12. Weiterbildungen der Erfindung sind in den abhängigen Ansprüchen angegeben.

Mit der in dem Modul vorgesehenen asynchronen und pitchfreien Transporteinrichtung zum Transport der elektrischen Leitungen wird eine flexible Gestaltung und Anordnung von Prozessstationen ermöglicht. Insbesondere ist die Transporteinrichtung nicht an einen bestimmten Takt oder eine bestimmte Bewegungsstrecke gebunden. Die Kapazitäten von Prozessstationen können in hohem Maß ausgeschöpft werden. Falls eine Prozessstation für die Bearbeitung länger als eine gewünschte Taktzeit benötigt, kann die Prozessstation mehrfach vorgesehen sein, so dass der jeweilige Bearbeitungsschritt an mehreren Prozessstationen zumindest teilweise zeitgleich durchgeführt und damit die Taktzeit verkürzt werden kann. Falls beispielsweise die Bearbeitungszeit einer ersten Prozessstation ungefähr doppelt so lang wie die Bearbeitungszeit einer zweiten Prozessstation ist, kann die erste Prozessstation zweifach vorgesehen werden, so dass zwei elektrische Leitungen/Leitungsenden an den beiden ersten Prozessstationen parallel bearbeitet und anschließend nacheinander zu der zweiten Prozessstation transportiert und dort bearbeitet werden können. Die beiden ersten Prozessstationen können dann bereits wieder zwei neue Leitungen/Leitungsenden bearbeiten. Dabei kann die jeweilige Strecke zwischen einer der beiden ersten Prozessstationen und der zweiten Prozessstation unterschiedlich sein. Bei noch größeren Unterschieden zwischen den Bearbeitungszeiten der ersten und der zweiten Prozessstation können auch mehr als zwei erste Prozessstationen verwendet werden. Schnelle Prozessstationen mit kurzen Bearbeitungszeiten können mehrfach genutzt werden. Da es keinen festen Pitch gibt, können benachbarte Prozessstationen flexibel angeordnet werden. Die Ausnutzung des zur Verfügung stehenden Platzes kann verbessert werden.

Durch Verwendung einer Maschinenbasis mit einem Schweißrahmen können die Stabilität und die Festigkeit des Moduls erhöht werden. Der Schweißrahmen kann bspw. annähernd die Gestalt eines Kubus oder eines Quaders aufweisen. Der Schweißrahmen kann in einer Draufsicht entlang einer z-Achse bspw. eine im Wesentlichen rechteckige oder quadratische Form aufweisen. Der Schweißrahmen kann das Modul auf dem Boden abstützen und bspw. mit Füßen, die auf dem Boden stehen, versehen sein. Der Schweißrahmen kann bspw. aus Profilen ausgebildet sein, die miteinander verschweißt sind. Der Schweißrahmen kann bspw. aus Stahl ausgebildet sein. Der Schweißrahmen kann bevorzugt eine Höhe entlang einer z-Achse im Bereich von 0,5 m bis 1,5 m aufweisen. Der Schweißrahmen kann bevorzugt eine Länge entlang einer x-Achse im Bereich von 0,5 m bis 10 m, bevorzugt 1 m bis 5 m, bspw. 1,5 m oder 3 m aufweisen. Der Schweißrahmen kann bevorzugt eine Breite entlang einer y-Achse im Bereich von 0,5 m bis 10 m, bevorzugt 1 m bis 5 m aufweisen.

Toleranzketten können vermieden werden, und somit können Fertigungstoleranzen verringert werden, indem die Transporteinrichtung an einer Auflage der Maschinenbasis anbracht wird, an der auch die Prozessstationen montiert werden. Bei der Auflage kann es sich bspw. um eine an dem Schweißrahmen angebrachte Metallplatte handeln. Eine Höhe bzw. horizontale Ausrichtung der Auflage kann durch Ausgleichselemente, die bspw. zwischen der Auflage und dem Schweißrahmen vorgesehen sind, anpassbar sein. Pro Modul können mindestens drei oder mindestens vier oder mindestens sechs Ausgleichselemente vorgesehen sein. Die Ausgleichselemente können bspw. mittels eines Gewindes höhenverstellbar sein. Die Auflage kann bspw. eine Platte aufweisen. Die Platte kann horizontal ausgerichtet sein. Auf der Platte können Profile zu Anbringung von Prozessstationen vorgesehen sein. Die Auflage kann einen integrierten Luftspeicher aufweisen. Der Schweißrahmen kann zwischen der Auflage und dem Boden angeordnet sein und die Auflage mit dem Boden verbinden.

Mittels mehrerer unabhängig angetriebener Werkstückträger können mehrere elektrische Leitungen/Leitungsenden parallel an verschiedenen Prozessstationen bearbeitet und größtenteils unabhängig von dem Bearbeitungszustand der jeweils anderen Leitungen/Leitungsenden nach Abschluss des Bearbeitungsvorgangs an einer Prozessstation bspw. zu der nächsten Prozessstation weiterbewegt werden.

Bei einem Werkstückträger kann es sich um eine Vorrichtung zum Halten einer elektrischen Leitung oder mehrerer elektrischer Leitungen bzw. eines oder mehrerer Leitungsenden handeln. Der Werkstückträger kann mit einem oder mehreren Greifern zum Halten der elektrischen Leitung(-en) bzw. des Leitungsendes/der Leitungsenden versehen sein. Der/die Greifer kann/können bewegbar sein und dazu ausgebildet sein, die Leitung(-en) bzw. das Leitungsende/die Leitungsenden durch Klemmung zu halten. Eine Bewegung des Greifers/der Greifer zum Ergreifen bzw. Loslassen der elektrischen Leitung(-en) bzw. des Leitungsendes/der Leitungsenden kann bspw. mechanisch/elektrisch/magnetisch/pneumatisch/hydraulisch erfolgen. Die Bewegung kann bspw. von einer zentralen Steuerung für jeden Greifer/Werkstückträger individuell gesteuert werden.

Der Werkstückträger kann bspw. unter Eingriff mit einer Schiene entlang der Schiene bewegbar sein. Der Werkstückträger kann bspw. auf/in der Schiene gleiten/schweben und/oder mit Rollen zur Bewegung entlang der Schiene versehen sein. Der/die Greifer können bspw. an einem oberen Ende des Werkstückträgers vorgesehen sein.

Ein magnetischer Antrieb der Werkstückträger stellt eine zweckmäßige Antriebsausgestaltung dar, mittels derer sich die Werkstückträger asynchron und pitchfrei, insbesondere unabhängig voneinander bewegen lassen. Eine Transporteinrichtung mit magnetischem Antrieb lässt sich einfach erweitern und lässt eine große Gesamtlänge des Systems zu. Der magnetische Antrieb kann bspw. derart ausgebildet sein, dass die Werkstückträger mittels eines Magnetfelds/Magnetfeldern linear entlang einer Schiene/Schienen bewegt werden. Die Transporteinrichtung kann einen Linearmotor mit magnetisch angetriebenen Werkstückträgern aufweisen. Insbesondere können die Werkstückträger quasi kontinuierlich, d.h. mit beliebiger Auflösung, bewegt werden. Bei der Transporteinrichtung kann es sich beispielsweise um eine Einrichtung wie das System XTS (eingetragene Marke) der Beckhoff Automation GmbH handeln.

Die Werkstückträger können bspw. durch einen elektrischen/mechanischen Antrieb bewegt werden. Bspw. kann ein Werkstückträger einen Elektromotor aufweisen, der dazu ausgebildet ist, ein Zahnrad, das mit einer Verzahnung an einer Schiene in Eingriff ist, anzutreiben, so dass der Werkstückträger entlang der Schiene bewegt wird. Der Werkstückträger kann bspw. einen Linearmotor aufweisen.

Die Werkstückträger können linear, bevorzugt entlang einer horizontalen Richtung, bewegt werden. Eine derartige Transporteinrichtung ist einfach erweiterbar. Der lineare und pitchfreie Transport in Verbindung mit den Prozessstationen ermöglicht einen maximalen Füllgrad des Systems auf minimaler Länge.

Bei einer Ausgestaltung mit zwei Schienen können die Prozessstationen entlang einer ersten Schiene angeordnet sein. Der Transport von elektrischen Leitungen/Leitungsenden kann entlang dieser ersten Schiene von einem Ausgangspunkt zu einem Endpunkt einer Bearbeitungsstrecke erfolgen. Mittels der zweiten Schiene können die Werkstückträger zu dem Ausgangspunkt der ersten Schiene zurückbewegt werden, nachdem bspw. die jeweils bearbeitete Leitung abgelegt wurde. Verbindungsstücke (Umlenkstücke/Wendeschienen) an den Enden der beiden Schienen können die Schienen miteinander verbinden, so dass die Werkstückträger an dem Ende der einen Schiene zu der anderen Schiene bewegt werden können, und umgekehrt.

Die Werkstückträger können bspw. umlaufend bewegt werden oder können hin und her bewegt werden. Bspw. kann ein Werkstückträger eine elektrische Leitung an einer Einlagestation aufnehmen, von Prozessstation zu Prozessstation transportieren und in einer Ablagestation ablegen. Danach kann sich der Werkstückträger wieder zu der Einlagestation zurückbewegen.

Alternativ können bspw. bestimmte Werkstückträger für bestimmte Bereiche des Systems zuständig sein. Bspw. kann es einen Werkstückträger geben, der die elektrischen Leitungen von der Einlagestation zu der ersten Prozessstation transportiert. Ein anderer bzw. mehrere andere Werkstückträger können die elektrischen Leitungen von der ersten Prozessstation abholen und von Prozessstation zu Prozessstation bewegen. Wieder ein anderer Werkstückträger kann die bearbeiteten elektrischen Leitungen von der letzten Prozessstation zu der Ablagestation transportieren. Bei sich hin und her bewegenden Werkstückträgern kann eine einzelne Schiene ausreichen.

Es können mehr als zwei Schienen vorgesehen sein. Insbesondere können zwei zueinander parallele Schienen auf gleicher Höhe nebeneinander vorgesehen sein, auf denen sich bspw. unterschiedliche Werkstückträger unabhängig voneinander bewegen können. Werkstückträger können einander unter Nutzung mehrerer Schienen überholen oder ausweichen. Die Schienen können über verstellbare Weichen miteinander verbunden sein.

Eine Ausgestaltung, bei der die zweite Schiene oberhalb oder unterhalb der ersten Schiene angeordnet ist, ist platzsparend und kann den für das System erforderlichen Platzbedarf verringern.

Die Transporteinrichtung kann verschiedene Transportgeschwindigkeiten und/oder -richtungen realisieren. Bspw. können die Werkstückträger an unterschiedlichen Stellen der Transporteinrichtung mit unterschiedlichen Geschwindigkeiten und/oder in unterschiedlichen Richtungen bewegt werden. Dadurch können bspw. Abkühlzeiten und/oder Trockenzeiten bereitgestellt werden, ohne andere Prozesse zu behindern.

Pufferstrecken in der Transporteinrichtung ermöglichen, dass Werkstückträger mit vorbereiteten Leitungen vor einer momentan belegten Prozessstation warten und die Prozessstation anfahren können, sobald sie frei wird. Dadurch können Abläufe optimiert und die Ausnutzung von Bearbeitungskapazitäten verbessert werden.

Ein Modul für ein System zur Konfektionierung von elektrischen Leitungen kann grundsätzlich ohne Prozessstationen hergestellt werden. Prozessstationen können je nach Bedarf abhängig von den durchzuführenden Bearbeitungsschritten auf der Maschinenbasis installiert werden. Eine Vielzahl unterschiedlicher Prozessstationen kann verwendet werden. Prozessstationen können nachgerüstet, neu angeordnet, ersetzt oder entfernt werden. Vorhandene Prozessstationen müssen nicht zwingend verwendet werden. Bestimmte Prozessstationen können bspw. nur bei bestimmten Bearbeitungsvorgängen verwendet werden.

Das System kann zur Konfektionierung unterschiedlicher elektrischer Leitungen oder unter Verwendung unterschiedlicher Kontaktteile/Stecker ausgebildet sein. Prozessstationen, die für die Bearbeitung einer bestimmten elektrischen Leitung erforderlich sind, müssen für die Bearbeitung einer anderen elektrischen Leitung nicht erforderlich sein und müssen dementsprechend bei der Bearbeitung einer solchen anderen elektrischen Leitung nicht von der Transporteinrichtung bedient werden. Es sind verschiedene Bearbeitungsmöglichkeiten gegeben, die flexibel umgeschaltet werden können. Bspw. kann zwischen einseitiger und beidseitiger Bearbeitung von elektrischen Leitungen gewechselt werden. Dadurch ist eine sequentielle Bearbeitung nach verschiedenen Mustern möglich. Das System kann für eine Einzelproduktion und/oder für eine Batchproduktion ausgelegt sein bzw. schnell dazwischen umgestellt werden, oder ein Leitungssatz kann produziert werden.

Mittels einer Schutzhaube können Schutzmaßnahmen umgesetzt werden. Die Schutzhaube kann derart ausgebildet sein, dass sie bspw. für Wartungszwecke geöffnet werden kann. Durch Verwendung eines Profilrahmens lässt sich die Schutzhaube einfach zusammenbauen, erweitern und flexibel gestalten.

Module können mittels vordefinierter und miteinander kompatibler Anschlussstellen miteinander verbunden werden. Die Anschlussstellen können bspw. an dem Schweißrahmen vorgesehen sein. Auf jeder Seite eines Moduls entlang der x-Achse kann eine Anschlussstelle oder können mindestens zwei oder mindestens drei oder mindestens vier Anschlussstellen vorgesehen sein. Die Anschlussstellen können bspw. standardisierte mechanische Verbindungsstellen aufweisen. Die Module können anhand der Verbindungsstellen miteinander verbunden und bevorzugt zugleich positioniert werden. Die Anschlussstellen können zusätzlich oder alternativ eine elektrische, pneumatische und/oder hydraulische Schnittstelle aufweisen, die bspw. über eine modular aufgebaute Standardschnittstelle abgebildet werden kann. Die Module bzw. die Anschlussstellen können nach dem Prinzip Stecker-Buchse miteinander verbindbar sein.

Bevorzugt weist jedes Modul eine erste Anschlussstelle auf einer ersten Seite entlang der Transportrichtung, und eine zweite Anschlussstelle auf einer zu der ersten Seite entgegengesetzten zweiten Seite auf. Bevorzugt ist die erste Anschlussstelle mit der zweiten Anschlussstelle derart kompatibel ausgebildet, dass das jeweilige Modul auf der ersten Seite und/oder der zweiten Seite mit mindestens einem weiteren Modul, das ebenfalls die erste Anschlussstelle und/oder die zweite Anschlussstelle aufweist, verbindbar ist. Bevorzugt werden die Transporteinrichtungen der beiden Module miteinander verbunden und bilden eine gemeinsame Transporteinrichtung aus. Bevorzugt sind die ersten Anschlussstellen aller oder eines Teils der Module identisch. Bevorzugt sind die zweiten Anschlussstellen aller oder eines Teils der Module identisch.

Durch die Verbindung von zwei oder mehr Modulen lässt sich die Größe des Systems nach Bedarf leicht anpassen. Auch kann ein bestehendes System nachträglich durch die Hinzufügung eines oder mehrerer Module erweitert werden. Module können ersetzt oder entfernt werden. Mittels der vordefinierten Anschlussstellen lassen sich die Module einfach und zeitsparend in geeigneter Reihenfolge verbinden. Ein Aufwand zum Auf-/Umbau oder zur Erweiterung des Systems wird minimiert. Die Transporteinrichtung eines Moduls kann an ihren beiden Enden entlang der x-Achse abnehmbare Verbindungsstücke/Wendeschienen/Abschlusselemente aufweisen. Die Transporteinrichtungen miteinander zu verbindender Module können nach Abnahme der Verbindungsstücke/Wendeschienen/Abschlusselemente von den zu verbindenden Enden zu einer kombinierten Transporteinrichtung verbindbar sein. Die Enden der kombinierten Transporteinrichtung können durch Verbindungsstücke/Wendeschienen/Abschlusselemente abgeschlossen werden. Die kombinierte Transporteinrichtung kann einen durchgehenden Transport von elektrischen Leitungen durch das System ermöglich.

Aufgrund der Modularität des Systems kann das System bspw. von einer minimalen Ausstattung mit wenigen Prozessstationen und einer manuellen Einlage zu einer Vollausstattung mit einer automatischen Einlage aufgerüstet werden. Bspw. kann ein Leitungs-/Kabelwickler und/oder ein automatischer Leitungs-/Kabeleinzug als Einlage verwendet werden.

Die Transporteinrichtung kann an andere Transportsysteme und/oder Logistiksysteme ankoppelbar sein.

Das System kann eine zentrale Steuerung aufweisen, die den Betrieb der einzelnen Module steuert. Die Steuerung kann den Betrieb der Prozessstationen und/oder der Transporteinrichtung steuern. Jedes Modul kann eine Steuerung aufweisen, die den Betrieb der Prozessstationen und/oder der Transporteinrichtung in dem Modul steuert. Die Steuerungen der einzelnen Module können bspw. durch die zentrale Steuerung gesteuert werden. Die Steuerung eines der Module kann als Host dienen und die Steuerungen der anderen Module steuern.

Die zentrale Steuerung des Systems/der Host kann dazu ausgebildet sein, in dem System enthaltene Module automatisch zu erkennen und den Betrieb an die enthaltenen Module anzupassen. Dadurch wird eine Erweiterung des Systems vereinfacht, und der Arbeits- und Zeitaufwand bei einer Umstellung wird minimiert. Die in einem Modul/den Modulen installierten Prozessstationen können automatisch erkannt und referenziert werden. Die Module können vordefinierte Steckverbindungen bspw. zur Verbindung mit der Steuerung/einem CAN-Bus-System oder einem anderen Bus-System aufweisen.

Das System kann eine Einlagestation aufweisen. Die Einlagestation kann bspw. eine manuelle Handeinlage und/oder einen automatischen Leitungs-/Kabeleinzug/Coiler aufweisen. Die Einlagestation kann aus einem Modul ausgebildet sein bzw. ein Modul kann eine Einlagestation aufweisen.

Das System kann eine Versorgungsstation zum Zuführen bspw. von an die elektrischen Leitungen zu crimpenden Kontaktteilen zu einer oder mehreren Prozessstationen aufweisen. Die Versorgungsstation kann bspw. an einem Modul vorgesehen sein.

Das System kann eine Ablagestation aufweisen, in der die elektrischen Leitungen nach der Bearbeitung bspw. von den Werkstückträgern abgelegt werden, und aus der die elektrischen Leitungen nach Ablage entnommen werden können. Die Ablagestation kann aus einem Modul ausgebildet sein bzw. ein Modul kann eine Ablagestation aufweisen.

Das System kann im Sinne eines als "Lean" bekannten Konzepts produziert werden, so dass die Produktionszeit des Systems minimiert werden kann. Komponenten, wie Schweißrahmen, Profilrahmen, Prozessstationen usw. können unabhängig und bevorzugt mit Standardmaß hergestellt und bei Bedarf kombiniert werden. Abhängigkeiten zwischen den Komponenten können vermieden werden.

Weitere Merkmale und Zweckmäßigkeiten ergeben sich aus der Beschreibung von beispielhaften Ausführungsformen anhand der Figuren. Von den Figuren zeigen:
- Fig. 1: eine perspektivische Ansicht eines Systems zur Konfektionierung von elektrischen Leitungen,
- Fig. 2: eine perspektivische Ansicht eines Moduls für das System,
- Fig. 3: in a) und b) jeweils eine Seitenansicht des Moduls, ohne Prozessstationen bzw. mit an einer Auflage montierten Prozessstationen,
- Fig. 4: eine Transporteinrichtung,
- Fig. 5: in a) bis d) verschiedene Konfigurationen von Werkstückträgern mit elektrischen Leitungen (Kabeln), und
- Fig. 6: eine schematische Draufsicht des Systems.

Nachfolgend wird eine Ausführungsform unter Bezugnahme auf die Figuren beschrieben. Gleiche Merkmale sind in allen Figuren durch dieselben Bezugszeichen bezeichnet, wobei aus Gründen der Übersichtlichkeit nicht in allen Figuren alle Bezugszeichen eingesetzt sind.

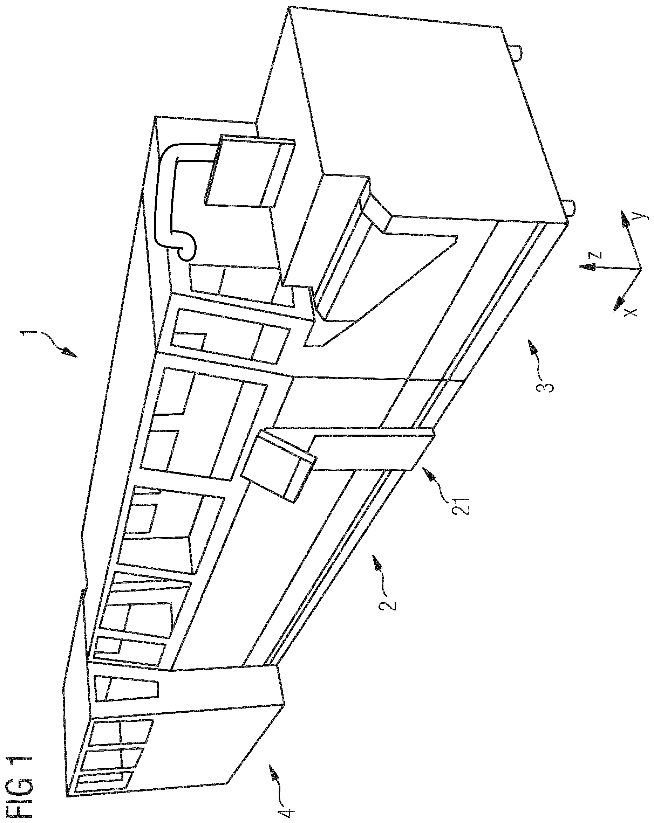

Fig. 1 zeigt ein System 1 zur Konfektionierung von elektrischen Leitungen. In Fig. 1 ist ein Koordinatensystem mit einer sich in der Zeichenebene vertikal erstreckenden z-Achse, einer x-Achse und einer y-Achse angegeben. Das Koordinatensystem dient der Erläuterung und schränkt die Ausrichtung des Systems nicht ein. Bevorzugt ist die z-Achse jedoch im Wesentlichen vertikal und parallel zu der Schwerkraftrichtung ausgerichtet, und die x-Achse und die y-Achse sind im Wesentlichen horizontal ausgerichtet.

Das System 1 weist ein Modul 2, eine Einlagestation 3 und eine Ablagestation 4 auf, die entlang der x-Achse miteinander verbunden sind. Das Modul 2 befindet sich zwischen der Einlagestation 3 und der Ablagestation 4. Das Modul 2 ist austauschbar. Es können zwei oder mehr Module 2 zwischen der Einlagestation 3 und der Ablagestation 4 vorgesehen sein. Das Modul 2 kann bevorzugt eine Länge entlang der x-Achse im Bereich von 0,5 m bis 10 m, bevorzugt 1 m bis 5 m, bspw. 1,5 m oder 3 m aufweisen. Das Modul 2 kann bevorzugt eine Höhe entlang der z-Achse im Bereich von 1 m bis 10 m, bevorzugt 2 m bis 4 m aufweisen. Das Modul 2 kann bevorzugt eine Breite entlang der y-Achse im Bereich von 0,5 m bis 10 m, bevorzugt 1 m bis 5 m aufweisen. Das System 1 weist eine Steuerung 21, die den Betrieb des Systems 1 steuert, auf.

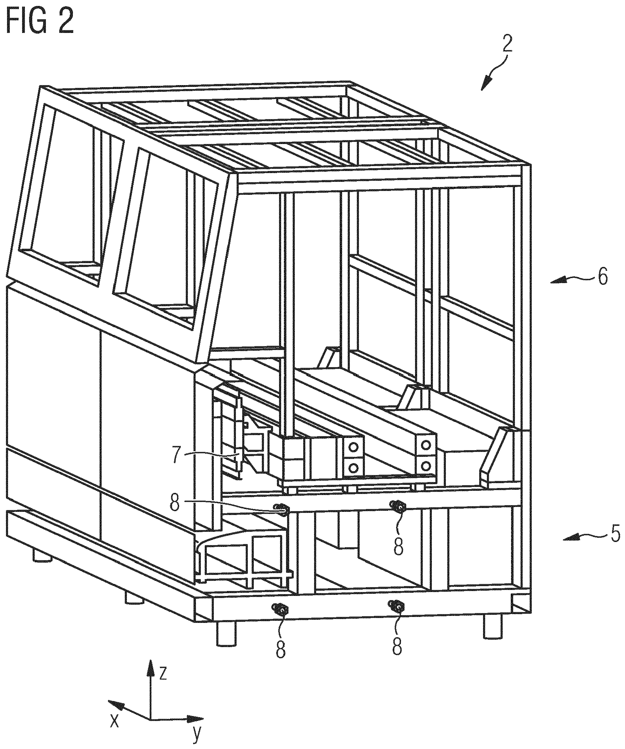

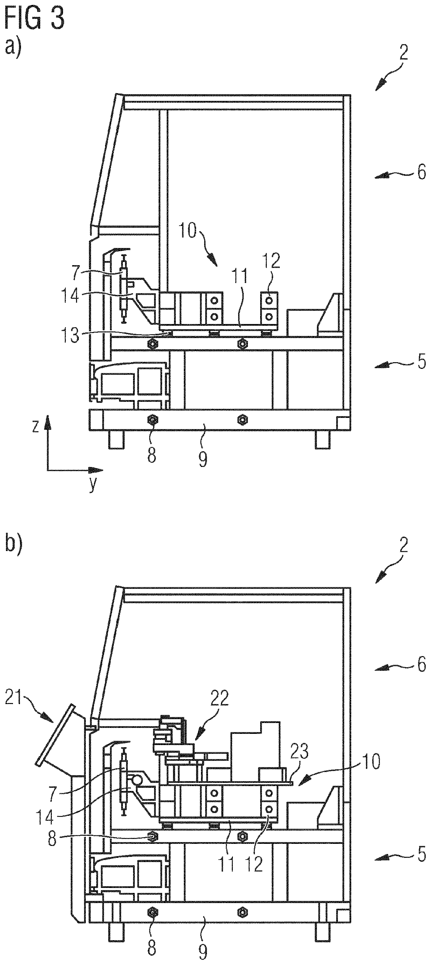

In Fig. 2 ist ein Modul 2 gezeigt. Das Modul 2 weist eine Maschinenbasis 5, eine Schutzhaube 6, eine Transporteinrichtung 7 und erste Verbindungspunkte 8 auf. In Fig. 3 sind Seitenansichten des Moduls 2 gezeigt.

Die Maschinenbasis 5 weist einen Schweißrahmen 9 auf. Die ersten Verbindungspunkte 8 sind auf einer ersten Seite des Moduls 2 entlang der x-Achse an dem Schweißrahmen 9 vorgesehen. Bei der vorliegenden Ausführungsform sind vier erste Verbindungspunkte 8 auf der ersten Seite des Moduls 2 entlang der x-Achse vorgesehen. Obwohl es in den Zeichnungen nicht gezeigt ist, sind auch auf einer der ersten Seite gegenüberliegenden Seite des Moduls 2 entlang der x-Achse vier zu den ersten Verbindungspunkten 8 auf der ersten Seite kompatible zweite Verbindungspunkte an dem Schweißrahmen 9 vorgesehen. Die ersten Verbindungspunkte 8 des Moduls 2 können mit den zweiten Verbindungspunkten eines weiteren Moduls, das auf der ersten Seite entlang der x-Achse an das Modul 2 angefügt wird, verbunden werden. Die ersten Verbindungspunkte 8 des Moduls 2 können auch mit an der Einlagestation 3 vorgesehenen zweiten Verbindungspunkten verbunden werden. Die zweiten Verbindungspunkte des Moduls 2 können mit an der Ablagestation 4 vorgesehenen ersten Verbindungspunkten verbunden werden. Auf diese Weise kann das in Fig. 1 gezeigte System 1 ausgebildet werden.

Das System 1 kann ein Modul 2 oder mehrere, entlang der x-Achse nebeneinandergestellte Module 2 aufweisen. In dem System 1 können die ersten Verbindungspunkte 8 und die zweiten Verbindungspunkte miteinander vertauscht werden, d.h. die ersten Verbindungspunkte 8 können auf der zweiten Seite des Moduls/der Module 2 angeordnet sein und die zweiten Verbindungspunkte können auf der ersten Seite des Moduls/der Module 2 angeordnet sein. Die Einlagestation 3 kann sich auf der ersten Seite des Systems 1 oder auf der zweiten Seite des Systems 1 befinden, und die Ablagestation 4 kann sich auf der jeweils gegenüberliegenden Seite befinden.

Die Schutzhaube 6 ist oberhalb der Maschinenbasis 5 angeordnet. Die Schutzhaube 6 bedeckt die Maschinenbasis 5, die Auflage 10 und die Transporteinrichtung 7. Die Maschinenbasis 5 und die Schutzhaube 6 bilden einen Raum zur Aufnahme einer oder mehrerer Prozessstationen 22 aus. Die Schutzhaube 6 bedeckt auch die Prozessstationen 22. Die Schutzhaube 6 ist aus Profilrahmen ausgebildet. Die Schutzhaube 6 kann mindestens teilweise geöffnet und geschlossen werden. Die Schutzhaube 6 weist Scharniere und Federn zum Öffnen und Schließen der Schutzhaube 6 auf.

Die Maschinenbasis 5 weist eine Auflage 10 auf. Die Auflage 10 weist eine Platte 11 und Profile 12 zur Montierung einer oder mehrerer Prozessstationen 22 auf. Die Profile 12 sind separat ausgebildet und starr an der Platte 11 befestigt oder integral mit der Platte 11 ausgebildet. Die Auflage 10 ist auf dem Schweißrahmen 9 angeordnet. Die Auflage 10, genauer gesagt die Platte 11, ist über Ausgleichselemente 13 mit dem Schweißrahmen 9 verbunden. Die horizontale Ausrichtung der Auflage 10 bzw. der Platte 11 kann mittels der Ausgleichselemente 13 angepasst werden.

Wie in Fig. 3 b) gezeigt ist, kann eine Prozessstation 22 an der Auflage 10 montiert werden. Bei der vorliegenden Ausführungsform weist die Prozessstation 22 eine Basisplatte 23 auf, die auf den Profilen 12 montiert wird. Auf der Basisplatte 12 befinden sich weitere Elemente der Prozessstation 22. Es können unterschiedliche Arten von Prozessstationen 22 eingesetzt werden. Beispielsweise ist eine Prozessstation 22 eine Vorrichtung zur Konfektionierung elektrischer Leitungen, insbesondere zum Abisolieren von Leitungsenden und/oder zum Aufweiten von Schirmen von Leitungsenden und/oder zum Crimpen von Kontaktteilen oder Steckern oder Anschlussmitteln an Leitungsenden und/oder zum Orientieren von elektrischen Leitungen und/ oder zum Fügen von Teilen auf zu bearbeitende elektrische Leitungen und/oder zur Kontrolle und/oder zur Qualitätsprüfung. An der Auflage 10 kann/können bspw. mindestens eine oder mindestens zwei oder mindestens drei Prozessstationen 22 bevorzugt nebeneinander in einer Richtung entlang der x-Achse montierbar sein oder montiert sein. Bearbeitungspositionen von nebeneinander angeordneten Prozessstationen 22 befinden sich im Wesentlichen auf derselben Höhe in einer Richtung entlang der z-Achse.

An der Auflage 10 ist eine Halterung 14 für die Transporteinrichtung 7 angebracht. Die Halterung 14 ist direkt an der Auflage 10 angebracht. Die Transporteinrichtung 7 ist mittels der Halterung 14 direkt mit der Auflage 10 und nicht mit dem Schweißrahmen 9 verbunden. Die Transporteinrichtung 7 ist dazu ausgebildet, zu bearbeitende elektrische Leitungen/Leitungsenden an der Einlagestation 3 aufzunehmen, zu der Prozessstation/den Prozessstationen 22 hin und von der Prozessstation/den Prozessstationen 22 weg zu bewegen/transportieren und an der Ablagestation 4 abzulegen. Die Transporteinrichtung 7 ist derart angeordnet, dass von der Transporteinrichtung 7 transportierte elektrische Leitungen von auf der Auflage 10 montierten Prozessstationen 22 bearbeitet werden können. Die Transporteinrichtung 7 befindet sich auf der Maschinenbasis 5 im Wesentlichen oberhalb des Schweißrahmens 9. Alternativ kann die Transporteinrichtung 7 entlang der y-Achse von der Maschinenbasis 5 bzw. dem Schweißrahmen 9 vorstehen. Die Halterung 14 ist an einem Ende der Auflage 10 entlang der y-Achse angebracht. Die Transporteinrichtung 7 befindet sich auf einer Seite entlang der y-Achse neben der Auflage. 10. Die Transporteinrichtung 7 erstreckt sich entlang der x-Achse und der z-Achse. Die Längsrichtung der Transporteinrichtung 7 verläuft entlang der x-Achse.

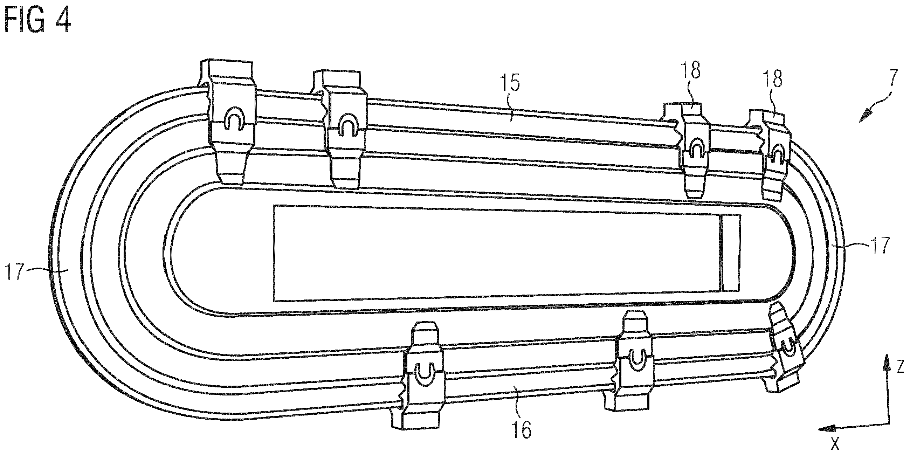

In Fig. 4 ist die Transporteinrichtung 7 gezeigt. Die Transporteinrichtung 7 weist eine erste Schiene 15 und eine zweite Schiene 16 auf. Die in Fig. 4 gezeigte Transporteinrichtung 7 weist ferner zwei Verbindungsstücke 17 auf. Die erste Schiene 15 und die zweite Schiene 16 erstrecken sich jeweils horizontal entlang der x-Achse. Die erste Schiene 15 und die zweite Schiene 16 sind jeweils linear ausgebildet. Die erste Schiene 15 befindet sich oberhalb der zweiten Schiene 16. Die Transporteinrichtung 7 ist über die Halterung 14 derart an der Auflage 10 angebracht, dass sich die erste Schiene 15 in Bezug auf eine Richtung entlang der z-Achse im Wesentlichen in derselben Höhe wie die Bearbeitungspositionen der Prozessstationen 22 bzw. geringfügig unterhalb der Bearbeitungspositionen befindet.

Die erste Schiene 15 und die zweite Schiene 16 sind an ihren jeweiligen Enden über die Verbindungsstücke 17 miteinander verbunden. Die Verbindungsstücke 17 sind abnehmbar. Nach Abnahme der jeweiligen Verbindungsstücke 17 können die ersten Schienen 15 bzw. die zweiten Schienen 16 miteinander zu verbindender Module 2/der Einlagestation 3/der Ablagestation 4 zu einer kombinierten Transporteinrichtung verbunden werden. Die Schienen 15, 16 können an ihren Enden miteinander kompatible Steckverbindungen aufweisen. Die Verbindungsstücke 17 können insbesondere an den Enden der kombinierten Transporteinrichtung bspw. in der Einlagestation 3 und der Ablagestation 4 angebracht werden. Die Enden der kombinierten Transporteinrichtung müssen sich nicht in der Einlagestation 3 und der Ablagestation 4 befinden, sondern können sich bspw. auch jeweils in einem Modul 2 befinden.

Die Transporteinrichtung 7 weist mehrere (bei der in Fig. 4 gezeigten Ausgestaltung sieben) Werkstückträger 18 auf. Die Werkstückträger 18 sind dazu ausgebildet, elektrische Leitungen/Leitungsenden zu halten und zu transportieren. Die Werkstückträger 18 sind entlang der ersten Schiene 15, der zweiten Schiene 16 und der Verbindungsstücke 17 bewegbar. Die Werkstückträger 18 können umlaufend entlang der ersten Schiene 15, eines der beiden Verbindungsstücke 17, der zweiten Schiene 16 und des anderen der beiden Verbindungsstücke 17 bewegt werden. Die Werkstückträger 18 können in einer Richtung oder in beiden Richtungen umlaufend bewegbar sein. Die Werkstückträger 18 werden magnetisch, bevorzugt über einen Linearmotor, angetrieben. Bei der Transporteinrichtung kann es sich bspw. um das System XTS (eingetragene Marke) der Beckhoff Automation GmbH handeln.

Die Werkstückträger 18 nehmen die elektrischen Leitungen/Leitungsenden an der Einlagestation 3 auf, halten sie während des Transports von Prozessstation 22 zu Prozessstation 22 und legen sie an der Ablagestation 4 ab. Die Werkstückträger 18 sind bspw. mit Greifern zum Halten der elektrischen Leitungen/Leitungsenden versehen. Die Greifer können mechanisch/elektrisch/magnetisch/pneumatisch/hydraulisch betätigt werden. Die Greifer können bspw. von der Steuerung 21 gesteuert werden.

Die Transporteinrichtung 7 eines einzelnen Moduls 2 muss die beiden Verbindungsstücke 17 nicht aufweisen. Bei nebeneinandergestellten und miteinander verbundenen Modulen 2 sowie der Einlagestation 3 und der Ablagestation 4 an den beiden Enden des Systems 1 sind die jeweiligen ersten Schienen 15 zu einer kombinierten ersten Schiene miteinander verbunden und sind die jeweiligen zweiten Schienen 16 zu einer kombinierten zweiten Schiene miteinander verbunden. Die Verbindungsstücke 17 befinden sich an den beiden Enden der auf diese Weise erhaltenen kombinierten Transporteinrichtung bzw. der kombinierten ersten Schiene und der kombinierten zweiten Schiene, so dass die Werkstückträger 18 umlaufend um die kombinierte erste Schiene, das eine Verbindungsstück 17, die kombinierte zweite Schiene und das andere Verbindungsstück 17 bewegt werden können. Die Werkstückträger 18 können somit von der Einlagestation 3 entlang des Moduls 2 bzw. der Module 2 zu der Ablagestation 4 und zurück bewegt werden.

Die Werkstückträger 18 können unabhängig voneinander bewegt werden. Die Werkstückträger 18 können mit unterschiedlichen Geschwindigkeiten und/oder in unterschiedlichen Richtungen bewegt werden und können an beliebigen Stellen entlang der ersten Schiene 15, der zweiten Schiene 16 und der Verbindungsstücke 17 anhalten. Ein oder mehrere Werkstückträger 18 kann/können bewegt werden, während ein anderer oder mehrere andere Werkstückträger 18 nicht bewegt wird/werden. Die Bewegungsgeschwindigkeiten und -richtungen einzelner Werkstückträger 18 können gleich oder voneinander verschieden sein. Die Werkstückträger 18 können somit asynchron und pitchfrei, d.h. mit unterschiedlichen Bewegungsstrecken zwischen aufeinanderfolgenden Haltepunkten, bewegt werden.

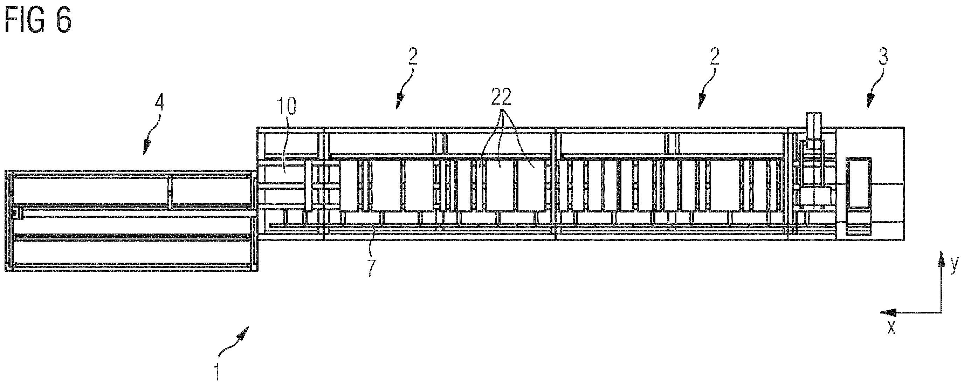

Die Prozessstationen 22 können mit unterschiedlichen oder mit gleichen Abständen auf der Auflage 10 montiert werden. Die Abstände der Bearbeitungspositionen der Prozessstationen 22 entlang der x-Achse können gleich oder zumindest teilweise unterschiedlich sein. Der auf der Auflage 10 zur Verfügung stehende Raum kann somit optimal genutzt werden. Fig. 6 zeigt eine Draufsicht des Systems 1 mit entlang der x-Achse nebeneinander auf der Auflage 10 montierten Prozessstationen 22. Die Bearbeitungspositionen der Prozessstationen 22 entlang der z-Achse sind bevorzugt gleich, d.h. befinden sich auf derselben Höhe.

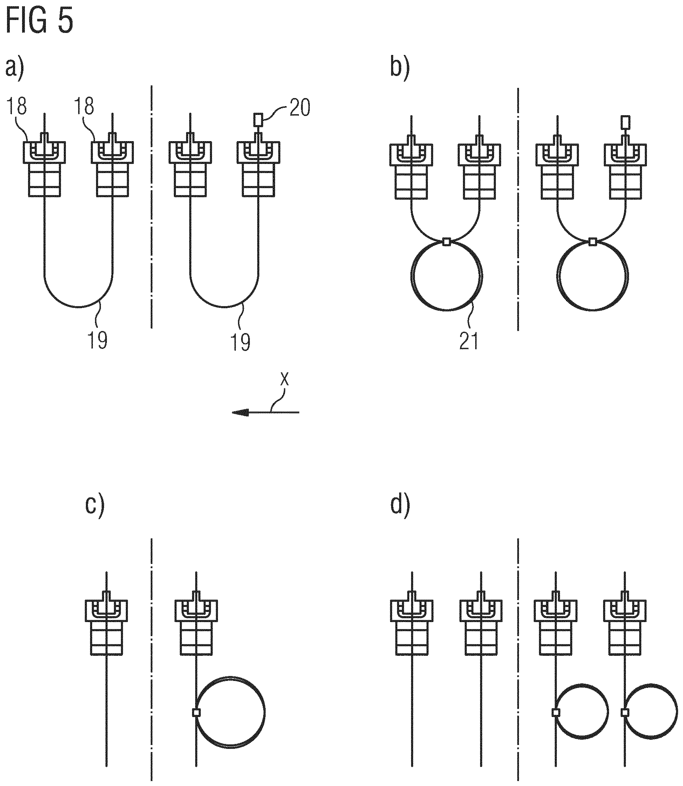

In Fig. 5 sind Werkstückträger 18 mit unterschiedlich ausgestalteten Kabeln (synonym für elektrische Leitungen) 19 gezeigt. Bspw. können die beiden Enden eines einzelnen Kabels 19 von zwei benachbarten Werkstückträgern 18 in der Transporteinrichtung 7 getragen bzw. gehalten werden und das Kabel 19 kann dazwischen als Schlaufe (engl. "Loop") vorliegen, wie in Fig. 5a) und Fig. 5b) gezeigt ist. In diesem Fall können beide Enden des Kabels 19 bearbeitet werden. Es kann auch nur ein Ende eines Kabels 19 bearbeitet und demnach von einem Werkstückträger 18 getragen bzw. gehalten werden, wie bspw. in Fig. 5c) und Fig. 5d) gezeigt ist. Es können beide Enden eines Kabels 19 jeweils von einem Werkstückträger 18 getragen und beide gleichzeitig oder jeweils eines der beiden Enden des Kabels 19 bearbeitet werden. Es können beide Enden eines Kabels 19 von einem einzelnen Werkstückträger 18 getragen werden. Je nach Länge des Kabels 19 kann ein Teil des Kabels 19 in Form einer Wicklung (engl. "Coil") 21 vorliegen, wie bspw. in Fig. 5b) und jeweils auf der rechten Seite in Fig. 5c) und Fig. 5d) gezeigt ist. An einem oder beiden Enden eines Kabels 19 kann ein Kontaktteil 20 angebracht sein.

Die Werkstückträger 18 können die zu bearbeitenden Kabel 19 bzw. deren Enden an der Einlagestation 3 aufnehmen, entlang der ersten Schiene 15 durch die aus dem Modul 2/den Modulen 2 gebildete Bearbeitungsstrecke von Prozessstation 22 zu Prozessstation 22 bewegen und die bearbeiteten Kabel 19 an der Ablagestation 4 ablegen.

Es ist eine Vielzahl unterschiedlicher Bearbeitungssituationen realisierbar.

Bspw. kann eine Prozessstation 22 eine Bearbeitungsposition aufweisen, die von den Werkstückträgern 18 nacheinander angefahren wird. Eine Prozessstation 22 kann zwei Bearbeitungspositionen aufweisen, die von zwei Werkstückträgern 18 gleichzeitig angefahren werden oder die von einem Werkstückträger 18 nacheinander angefahren werden oder von denen jeweils nur eine von einem Werkstückträger 18 angefahren wird. Es können zwei Prozessstationen 22 mit jeweils einer Bearbeitungsposition vorhanden sein, die gleichzeitig von zwei Werkstückträgern 18 angefahren werden, wobei die zwei Prozessstationen 22 identisch sein können.

Prozessstationen 22 können ausgeschaltet werden, falls sie bspw. für einen bestimmten Bearbeitungsvorgang nicht erforderlich sind. Eine ausgeschaltete Prozessstation 22 kann dennoch von den Werkstückträgern 18 angefahren werden, sofern dies bspw. aufgrund der Länge des zu bearbeitenden Kabels 19 erforderlich ist, oder kann nicht angefahren werden.

Die Transporteinrichtung 7 kann eine Pufferstrecke aufweisen, auf der ein oder mehrere Werkstückträger 18 warten können, solange bspw. eine nachgelagerte Prozessstation 22 von einem anderen Werkstückträger 18 belegt ist. Die Pufferstrecke kann insbesondere vor einem oder mehreren taktzeitkritischen Modul(-en) liegen. In der Pufferstrecke kann ein wartender Werkstückträger 18 anhalten, d.h. nicht bewegt werden, oder kann mit reduzierter Geschwindigkeit bewegt werden.

Bei der oben beschriebenen Ausführungsform werden die Werkstückträger 18 magnetisch angetrieben. Alternativ können andere Antriebsformen eingesetzt werden. Bspw. können die Werkstückträger mechanisch angetrieben werden.

Bei der oben beschriebenen Ausführungsform werden die Werkstückträger 18 umlaufend entlang der ersten Schiene 15, des einen Verbindungsstücks 17, der zweiten Schiene 16 und des anderen Verbindungsstücks 17 bewegt. Alternativ kann eine Transporteinrichtung mit nur einer Schiene verwendet werden. Die Werkstückträger 18 können zur Bearbeitung der Kabel 19 entlang der einen Schiene von Prozessstation 22 zu Prozessstation 22 bewegt und nach Abschluss der Bearbeitung in der entgegengesetzten Richtung entlang der Schiene zurückbewegt werden.

Die Auflage 10 kann weggelassen werden. Die Prozessstationen 22 und/oder die Transporteinrichtung 7 können an dem Schweißrahmen 9 oder an einem anderen an der Maschinenbasis 5 angebrachten Teil montiert werden.

Die Schutzhaube 6 kann weggelassen werden. Die Schutzhaube 6 muss nicht aus Profilrahmen ausgebildet sein.

Das System 1 muss die Steuerung 21 nicht aufweisen. Das System 1 kann extern gesteuert werden.

Das System 1 kann ein einzelnes Modul 2 oder mehrere Module 2 aufweisen. Die Einlagestation 3 und/oder die Ablagestation 4 kann weggelassen bzw. durch eine alternative Station oder ein System zum Zuführen bzw. Abführen elektrischer Leitungen ersetzt werden. Die Einlagestation 3 und die Ablagestation 4 können kombiniert werden und die Kabel 19 können bspw. nach der Bearbeitung von den Werkstückträgern 18 entlang der zweiten Schiene 16 zu der kombinierten Einlage- und Ablagestation zurücktransportiert werden. Die Einlagestation und/oder die Ablagestation können in ein Modul integriert sein.

Es wird explizit erklärt, dass alle Merkmale, die in der Beschreibung und/oder den Ansprüchen offenbart sind, dazu bestimmt sind, separat und unabhängig voneinander sowohl für den Zweck der ursprünglichen Offenbarung als auch für den Zweck der Beschränkung der beanspruchten Erfindung unabhängig von der Zusammenstellung der Merkmale in den Ausführungsformen und/oder den Ansprüchen offenbart zu werden. Es wird explizit erklärt, dass alle Wertebereiche oder Angaben von Gruppen von Objekten jeden möglichen Zwischenwert oder jedes mögliche dazwischen liegende Objekt sowohl für den Zweck der ursprünglichen Offenbarung als auch für den Zweck der Beschränkung der beanspruchten Erfindung, insbesondere zur Bestimmung der Grenzen von Wertebereichen offenbaren.

## Patentansprüche

1. Modul (2) für ein System (1) zur Konfektionierung von elektrischen Leitungen (19), mit einer Maschinenbasis (5), auf der mindestens eine Prozessstation (22) zur Bearbeitung von elektrischen Leitungen (19) montierbar ist, und
einer asynchronen und pitchfreien Transporteinrichtung (7) zum Transport von mindestens einer der elektrischen Leitungen (19) zu der mindestens einen Prozessstation (22) hin und/oder von der mindestens einen Prozessstation (22) weg.

2. Modul (2) nach Anspruch 1, bei dem
die Maschinenbasis (5) einen Schweißrahmen (9) aufweist, an dem eine Auflage (10) angebracht ist,
die mindestens eine Prozessstation (22) an der Auflage (10) montierbar ist, und
die Transporteinrichtung (7) an der Auflage (10) angebracht ist.

3. Modul (2) nach Anspruch 1 oder 2, bei dem
die Transporteinrichtung (7) mehrere unabhängig angetriebene Werkstückträger (18) zum Transport von mindestens einer der elektrischen Leitungen (19) aufweist und dazu ausgebildet ist, die Werkstückträger (18) asynchron und pitchfrei zu bewegen.

4. Modul (2) nach Anspruch 3, bei dem
die Transporteinrichtung (7) dazu ausgebildet ist, die Werkstückträger (18) magnetisch anzutreiben.

5. Modul (2) nach Anspruch 3 oder 4, bei dem
die Transporteinrichtung (7) dazu ausgebildet ist, die Werkstückträger (18) linear in einer ersten Richtung zu bewegen.

6. Modul (2) nach einem der Ansprüche 3 bis 5, bei dem
die Transporteinrichtung (7) eine erste Schiene (15) und eine zweite Schiene (16) aufweist und dazu ausgebildet ist, die Werkstückträger (18) entlang der ersten Schiene (15) in der ersten Richtung zu bewegen und entlang der zweiten Schiene (16) in einer zu der ersten Richtung entgegengesetzten zweiten Richtung zu bewegen, wobei bevorzugt nur bei der Bewegung entlang der ersten Schiene (15) die mindestens eine elektrische Leitung (19) transportiert wird.

7. Modul (2) nach Anspruch 6, bei dem
die erste und die zweite Schiene (15, 16) horizontal und parallel zueinander verlaufen, und
die erste Schiene (15) oberhalb oder unterhalb der zweiten Schiene (16) angeordnet ist.

8. Modul (2) nach einem der Ansprüche 3 bis 7, bei dem
mindestens eine Prozessstation (22) zur Bearbeitung von Enden oder Zwischenbereichen der elektrischen Leitungen (19) auf der Maschinenbasis (5) montiert ist, und
die Transporteinrichtung (7) eine Pufferstrecke aufweist, auf der sich mindestens ein Werkstückträger (18) mit einer durch die mindestens eine Prozessstation (22) zu verarbeitenden Leitung (19) in einem Wartezustand, bei dem der Werkstückträger (18) nicht oder mit reduzierter Geschwindigkeit bewegt wird, befinden kann, während die Prozessstation (22) von einem anderen Werkstückträger (18) belegt ist.

9. Modul (2) nach einem der vorhergehenden Ansprüche, bei dem
mindestens eine Prozessstation (22) zur Bearbeitung von Enden oder Zwischenbereichen der elektrischen Leitungen (19) auf der Maschinenbasis (5) montiert ist, wobei es sich bei der mindestens einen Prozessstation (22) bevorzugt um eine Vorrichtung zur Konfektionierung der elektrischen Leitungen (19), insbesondere zum Abisolieren von Leitungsenden und/oder zum Aufweiten von Schirmen von Leitungsenden und/oder zum Crimpen von Kontaktteilen (20) oder Steckern oder Anschlussmitteln an Leitungsenden und/oder zum Orientieren von elektrischen Leitungen (19) und/oder zum Fügen von Teilen (20) auf zu bearbeitende elektrische Leitungen (19) und/oder zur Kontrolle und/oder zur Qualitätsprüfung handelt.

10. Modul (2) nach einem der vorhergehenden Ansprüche, ferner mit einer bevorzugt aus Profilrahmen ausgebildeten Schutzhaube (6), die imstande ist, die Maschinenbasis (5), die mindestens eine Prozessstation und die Transporteinrichtung (7) zumindest teilweise zu bedecken.

11. Modul (2) nach einem der vorhergehenden Ansprüche, ferner mit
einer ersten Anschlussstelle (8) auf einer ersten Seite entlang der Transportrichtung, und
einer zweiten Anschlussstelle auf einer zu der ersten Seite entgegengesetzten zweiten Seite, bei dem
die erste Anschlussstelle (8) mit der zweiten Anschlussstelle derart kompatibel ausgebildet ist, dass das Modul (2) auf der ersten Seite und/oder der zweiten Seite mit mindestens einem weiteren Modul (2) nach einem der vorhergehenden Ansprüche, das ebenfalls die erste Anschlussstelle (8) und/oder die zweite Anschlussstelle aufweist, derart verbindbar ist, dass die Transporteinrichtungen (7) der beiden Module (2) miteinander verbunden werden und eine gemeinsame Transporteinrichtung ausbilden.

12. System (1) mit mindestens einem Modul (2) nach einem der vorhergehenden Ansprüche und einer Steuerung, die dazu ausgebildet ist, den Betrieb der mindestens einen Prozessstation und der Transporteinrichtung (7) zu steuern.

13. System (1) nach Anspruch 12 mit mindestens zwei Modulen (2) nach Anspruch 11, bei dem die mindestens zwei Module (2) durch Verbindung der zweiten Anschlussstelle des ersten Moduls (2) und der ersten Anschlussstelle (8) des zweiten Moduls (2) miteinander verbunden sind.

14. System (1) nach Anspruch 12 oder 13, bei dem
die Steuerung dazu ausgebildet ist, die in dem System enthaltenen Module (2) automatisch zu erkennen und den Betrieb der mindestens einen Prozessstation (22) und der Transporteinrichtung (7) entsprechend den enthaltenen Modulen (2) anzupassen.

15. System (1) nach einem der Ansprüche 12 bis 14, ferner mit
einer Einlagestation (3), die einen Leitungswickler und/oder einen automatischen Leitungseinzug aufweist, und/oder
mindestens einer Versorgungsstation, und/oder
einer Ablagestation (4).

## Geänderte Patentansprüche

### Geänderte Patentansprüche gemäss Regel 137(2) EPÜ.

1. Modul (2) für ein System (1) zur Konfektionierung von elektrischen Leitungen (19), mit einer Maschinenbasis (5), auf der mindestens eine Prozessstation (22) zur Bearbeitung von elektrischen Leitungen (19) montierbar ist, und
einer asynchronen und pitchfreien Transporteinrichtung (7) zum Transport von mindestens einer der elektrischen Leitungen (19) zu der mindestens einen Prozessstation (22) hin und/oder von der mindestens einen Prozessstation (22) weg.

2. Modul (2) nach Anspruch 1, bei dem
die Maschinenbasis (5) einen Schweißrahmen (9) aufweist, an dem eine Auflage (10) angebracht ist,
die mindestens eine Prozessstation (22) an der Auflage (10) montierbar ist, und
die Transporteinrichtung (7) an der Auflage (10) angebracht ist.

3. Modul (2) nach Anspruch 1 oder 2, bei dem
die Transporteinrichtung (7) mehrere unabhängig angetriebene Werkstückträger (18) zum Transport von mindestens einer der elektrischen Leitungen (19) aufweist und dazu ausgebildet ist, die Werkstückträger (18) asynchron und pitchfrei zu bewegen.

4. Modul (2) nach Anspruch 3, bei dem
die Transporteinrichtung (7) dazu ausgebildet ist, die Werkstückträger (18) magnetisch anzutreiben.

5. Modul (2) nach Anspruch 3 oder 4, bei dem
die Transporteinrichtung (7) dazu ausgebildet ist, die Werkstückträger (18) linear in einer ersten Richtung zu bewegen.

6. Modul (2) nach einem der Ansprüche 3 bis 5, bei dem
die Transporteinrichtung (7) eine erste Schiene (15) und eine zweite Schiene (16) aufweist und dazu ausgebildet ist, die Werkstückträger (18) entlang der ersten Schiene (15) in der ersten Richtung zu bewegen und entlang der zweiten Schiene (16) in einer zu der ersten Richtung entgegengesetzten zweiten Richtung zu bewegen, wobei bevorzugt nur bei der Bewegung entlang der ersten Schiene (15) die mindestens eine elektrische Leitung (19) transportiert wird.

7. Modul (2) nach Anspruch 6, bei dem
die erste und die zweite Schiene (15, 16) horizontal und parallel zueinander verlaufen, und die erste Schiene (15) oberhalb oder unterhalb der zweiten Schiene (16) angeordnet ist.

8. Modul (2) nach einem der Ansprüche 3 bis 7, mit mindestens einer Prozessstation (22), bei dem die mindestens eine Prozessstation (22) zur Bearbeitung von Enden oder Zwischenbereichen der elektrischen Leitungen (19) auf der Maschinenbasis (5) montiert ist, und
die Transporteinrichtung (7) eine Pufferstrecke aufweist, auf der sich mindestens ein Werkstückträger (18) mit einer durch die mindestens eine Prozessstation (22) zu verarbeitenden Leitung (19) in einem Wartezustand, bei dem der Werkstückträger (18) nicht oder mit reduzierter Geschwindigkeit bewegt wird, befinden kann, während die Prozessstation (22) von einem anderen Werkstückträger (18) belegt ist.

9. Modul (2) nach einem der vorhergehenden Ansprüche, mit mindestens einer Prozessstation (22), bei dem die mindestens eine Prozessstation (22) zur Bearbeitung von Enden oder Zwischenbereichen der elektrischen Leitungen (19) auf der Maschinenbasis (5) montiert ist, wobei es sich bei der mindestens einen Prozessstation (22) bevorzugt um eine Vorrichtung zur Konfektionierung der elektrischen Leitungen (19), insbesondere zum Abisolieren von Leitungsenden und/oder zum Aufweiten von Schirmen von Leitungsenden und/oder zum Crimpen von Kontaktteilen (20) oder Steckern oder Anschlussmitteln an Leitungsenden und/oder zum Orientieren von elektrischen Leitungen (19) und/oder zum Fügen von Teilen (20) auf zu bearbeitende elektrische Leitungen (19) und/oder zur Kontrolle und/oder zur Qualitätsprüfung handelt.

10. Modul (2) nach einem der vorhergehenden Ansprüche, ferner mit einer bevorzugt aus Profilrahmen ausgebildeten Schutzhaube (6), die imstande ist, die Maschinenbasis (5), die mindestens eine Prozessstation und die Transporteinrichtung (7) zumindest teilweise zu bedecken.

11. Modul (2) nach einem der vorhergehenden Ansprüche, ferner mit
einer ersten Anschlussstelle (8) auf einer ersten Seite entlang der Transportrichtung, und
einer zweiten Anschlussstelle auf einer zu der ersten Seite entgegengesetzten zweiten Seite, bei dem
die erste Anschlussstelle (8) mit der zweiten Anschlussstelle derart kompatibel ausgebildet ist, dass das Modul (2) auf der ersten Seite und/oder der zweiten Seite mit mindestens einem weiteren Modul (2) nach einem der vorhergehenden Ansprüche, das ebenfalls die erste Anschlussstelle (8) und/oder die zweite Anschlussstelle aufweist, derart verbindbar ist, dass die Transporteinrichtungen (7) der beiden Module (2) miteinander verbunden werden und eine gemeinsame Transporteinrichtung ausbilden.

12. System (1) mit mindestens einem Modul (2) nach einem der vorhergehenden Ansprüche und einer Steuerung, die dazu ausgebildet ist, den Betrieb der mindestens einen Prozessstation und der Transporteinrichtung (7) zu steuern.

13. System (1) nach Anspruch 12 mit mindestens zwei Modulen (2) nach Anspruch 11, bei dem die mindestens zwei Module (2) durch Verbindung der zweiten Anschlussstelle des ersten Moduls (2) und der ersten Anschlussstelle (8) des zweiten Moduls (2) miteinander verbunden sind.

14. System (1) nach Anspruch 12 oder 13, bei dem
die Steuerung dazu ausgebildet ist, die in dem System enthaltenen Module (2) automatisch zu erkennen und den Betrieb der mindestens einen Prozessstation (22) und der Transporteinrichtung (7) entsprechend den enthaltenen Modulen (2) anzupassen.

15. System (1) nach einem der Ansprüche 12 bis 14, ferner mit
einer Einlagestation (3), die einen Leitungswickler und/oder einen automatischen Leitungseinzug aufweist, und/oder
mindestens einer Versorgungsstation, und/oder
einer Ablagestation (4).
